# EUROPÄISCHE PATENTSCHRIFT

(11) **EP 0 820 610 B1**
(45) Veröffentlichungstag und Bekanntmachung des Hinweises auf die Patenterteilung: **03.03.1999**
(21) Anmeldenummer: 96907323.8
(22) Anmeldetag: 01.04.1996
(51) Int. Cl.: G05B 19/042

(54) **VERFAHREN ZUR AUTOMATISCHEN ERZEUGUNG EINER STEUERUNG**
AUTOMATIC CONTROL GENERATION PROCESS
PROCEDE DE GENERATION AUTOMATIQUE D'UNE COMMANDE

(30) Priorität: 11.04.1995 DE 19513801
(43) Veröffentlichungstag der Anmeldung: 28.01.1998
(73) Patentinhaber: SIEMENS AKTIENGESELLSCHAFT, 80333 München (DE)
(72) Erfinder: WINKELMANN, Klaus, D-85521 Riemerling (DE)
(86) Internationale Anmeldenummer: DE9600577
(87) Internationale Veröffentlichungsnummer: WO9632667

(56) Entgegenhaltungen:
- EP-A- 0 208 997
- EP-A- 0 209 795
- EP-A- 0 420 174
- EP-A- 0 424 056

## Beschreibung

Die Erfindung betrifft Verfahren zur automatischen Erzeugung einer Steuerung.

Aus WO 94/12914 sind ein Verfahren zum Erstellen einer anwendungsabhängigen Logik eines freiprogrammierbaren Schaltwerks und eine Einrichtung zur Durchführung dieses Verfahrens bzw. eine Einrichtung zum Betrieb eines Steuerungssystems angegeben.

Die Aufgabe, die der Druckschrift US 5,301,100 zugrundeliegt, besteht darin, ein Kontrollsystem anzugeben, dessen Kontroll-Logik in standardisierter Form spezifiziert wird und nicht in womöglich mehreren Darstellungen (Spezifikationen, Programmiersprachen) angegeben werden muß. Dazu wird die Kontroll-Logik in einer Tabelle abgelegt. Das Programm, das mit dieser Tabelle arbeitet, ist statisch, wird daher in einen Nur-Lese-Speicher (ROM) einprogrammiert, um somit die Ausführungsgeschwindigkeit zu erhöhen. Weiterhin ist die standardisierte Form der Kontroll-Logik ein endlicher Automat, der optimiert, d.h. in vereinfachter Form, als Tabelle gespeichert ist und daher wenig Speicherplatz benötigt.

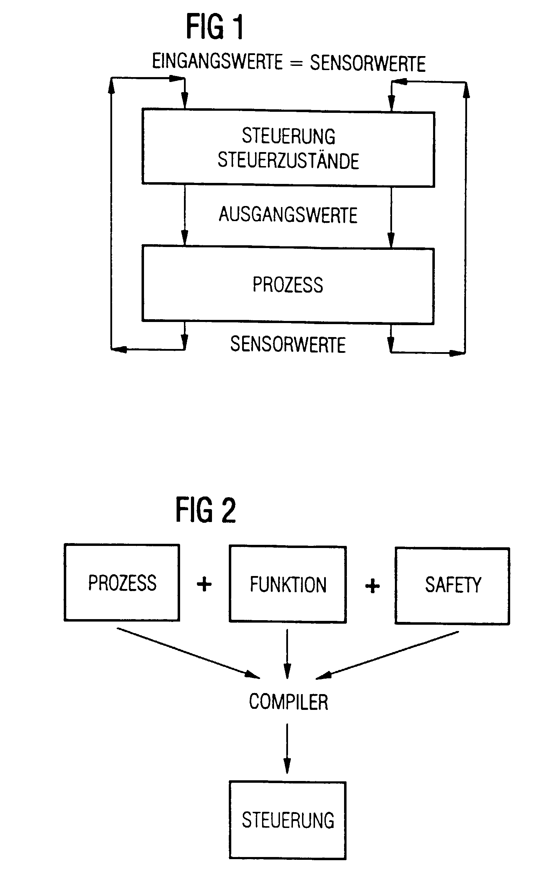

Die rationelle Entwicklung zuverlässiger Software für reaktive Systeme, wie es Steuerungen aller Art sind, ist heute vorrangiges Ziel. Figur 1 zeigt ein Prinzipbild eines Systems bestehend aus einer Steuerung und einem zu steuernden Prozeß. Die Steuerung muß so ausgeführt sein, daß der Prozeß nur zulässige Zustände einnimmt. Der Steuerung werden an den Eingängen Eingangswerte, z. B. Sensorwerte, zugeührt, die im folgenden Eingangszustände genannt werden. An den Ausgängen gibt die Steuerung Ausgangswerte, im folgenden Ausgangszustände genannt, ab, die den Prozeß so beeinflussen, daß er nur die zulässigen Zustände annehmen kann.

Bei der Programmierung derartiger speicherprogrammierbarer Steuerungen sind jeweils folgende Vorgaben zu beachten:
- die Funktionsweise der zu steuernden Geräte oder Prozesse - d.h. was bewirkt jeder einzelne Ausgangszustand der Steuerung, und wie sind die Sensorwerte, die der Steuerung geliefert werden, zu interpretieren.
- die von der Steuerung zu realisierende Funktion; z.B. Bewegungsabläufe.
- ggf. vorhandene einschränkende Sicherheitsbedingungen; z.B. sind bestimmte Kombinationen von Zuständen, oder bestimmte geometrische Konfigurationen zu vermeiden, bestimmte Aktoren dürfen nur aktiviert werden, wenn zugehörige Vorbedingungen (Verriegelungen) erfüllt sind etc.

Diese Vorgaben liegen jeweils in unterschiedlicher, meist informeller Form vor. Das technische Problem besteht nun darin, eine Steuerung so zu programmieren, daß sie den Vorgaben entspricht.
Im Gegensatz zu regelungstechnischen Aufgaben, bei denen die Theorie abhängig von Prozeßmodellen bestimmte (Standard-) Regelungsalgorithmen kennt, müssen diskrete Steuerungsaufgaben jeweils neu programmiert werden.
Die Programmierung speicherprogrammierbarer Steuerungen geschieht heute in der Weise, daß der Programmierer die logischen Verknüpfungen festlegt, nach denen die Ausgangszustände sich aus den Eingangs zustande und den Programmzuständen bestimmen.
Zur Programmierung von Abläufen existieren entsprechende Konstrukte von Programmiersprachen, um sog. Schrittketten und parallele Abläufe zu beschreiben. In jedem Fall ist es aber Sache des Programmierers, die Einhaltung der Funktion und der Sicherheitsbedingungen zu garantieren. M.a. W., der Zusammenhang zwischen dem Programm und den oben genannten Vorgaben ist nicht explizit dokumentiert.

Ein Problem bei diesem Vorgehen ist die Fehleranfälligkeit, denn schon bei mittelgroßen Systemen ist die Vielfalt der möglichen Systemzustände praktisch unüberschaubar groß; so werden nahezu immer Fälle übersehen, und bei der Inbetriebnahme müssen mit erheblichem Aufwand Programme umgeschrieben werden.

Noch gravierender ist das Problem, daß jedes Umschreiben, sei es wegen eines Fehlers, wegen geänderter Umgebungsbedingungen oder wegen neuer Anforderungen, die ganze Software betrifft - d.h. es gibt keinen Mechanismus, der die Auswirkungen einer Änderung lokal hält oder auch nur die von einer Änderung betroffenen Stellen markiert.

Der Erfindung liegt die Aufgabe zugrunde, aus einer anwendungsnahen Spezifikation einer Steuerungsaufgabe eine Steuerung zu erzeugen.Diese Aufgabe wird gemäß den Merkmalen von Patentanspruch 1 gelöst.

Weiterbildungen der Erfindung ergeben sich aus den abhängigen Patentansprüchen.

Die Erfindung wird anhand eines Ausführungsbeispiels erläutert, unter Verwendung einer Spezifikationssprache, die CSLxt genannt werden soll.

### 1. Grundsätzliche Darstellung der Erfindung

### 1.1 Grundkonzepte von CSLxt

Die Erfindung geht davon aus, daß der Entwurfsprozeß für reaktive Systeme immer mit den folgenden Komponenten beginnt (Figur 2):
- Beschreibung der zu steuernden Prozesse,
- Beschreibung der gewünschten Funktion des Gesamtsystems, und
- Sicherheitsanforderungen.

CSLxt umfaßt zum einen Sprachmittel, um die drei Komponenten der Spezifikation zu beschreiben, zum anderen die zur Generierung der Steuerung nötigen Verfahren.
Die tragenden Grundelemente des Ansatzes sind:
- die Spezifikation mit dem Konzept der endlichen Automaten,
- die Unterscheidung zwischen beeinflußbaren und nichtbeeinflußbaren Zustandsgrößen, und
- die Konstruktion einer Steuerung durch Iterationsverfahren.

Dem Verfahren liegt die Vorstellung zugrunde, daß auf jedes Ereignis im Prozeß, d.h. jede Änderung der Sensorwerte, eine Reaktion der Steuerung, d.h. eine Änderung der Aktor-Stellungen (Ausgangs-Werte) erfolgt. Das Zusammenwirken von Steuerung und Prozeß wird als ein Zwei-Personen-Spiel aufgefaßt, wobei die Steuerung ein bestimmtes Ziel verfolgt - nämlich Sicherheit und Funktion zu garantieren -, während der Prozeß als "Gegenspieler" dieses Ziel im ungünstigsten Fall zu verhindern sucht, jedenfalls aber nicht kooperiert. Nun wird das Verhalten des Prozesses (bzw. der Prozesse) als gegeben angenommen, die durch Sensorwerte beschriebenen Zustandsgrößen sind nicht (direkt) beeinflußbar. Dagegen sind die Aktoren von der Steuerung beeinflußbar. Das Verhalten der Steuerung - d.h. hier die Übergangsfunktion des Automaten, der die Steuerung beschreibt-, wird aus der Spezifikation des Ziels synthetisiert.

Dieser gesamte Generierungsprozeß läuft wie folgt ab:
1. Definition eines nicht-deterministischen Automaten, der alle physikalisch möglichen Verhaltensweisen beschreibt.
2. Beschreibung der erlaubten Zustands-Übergänge.
3. Einschränkung des durch 1. und 2. beschriebenen Automaten auf einen, der die Sicherheitseigenschaften erfüllt.
4. Einschränkung dieses Automaten auf einen, der die Funktion erfüllt.
Die letzten beiden Konstruktionsschritte machen intensiven Gebrauch von Iterationsverfahren im Zustandsraum des Gesamtsystems. Dies kann verstanden werden als ein Vorausschauen der Steuerung auf die möglichen "Spielzüge". Hierin unterscheidet sich CSLxt wesentlich von den meisten anderen Spezifikationsmethoden für reaktive Systeme, die die Übergangsfunktion eines Automaten zwar auch berechnen, aber dabei immer nur einen Schritt (einen "Zug", eine Transition) betrachten.

Das Verfahren zu 3. ist gekenzeichnet durch die folgenden Arbeitsschritte:
- Es wird die (in einem zu präzisierenden Sinne) größte stabilisierbare Teilmenge der als zulässig (sicher) spezifizierten Zustandsmenge iterativ bestimmt.
- Die Übergangsfunktion wird dadurch eingeschränkt, daß nur Übergänge zu sicheren Zuständen erlaubt werden.

Das Verfahren zu 4. ist durch die folgenden Schritte gekennzeichnet:
- die Funktion wird durch Angabe bedingter Zielzustände beschrieben.
- Es wird iterativ die Menge all derjenigen Zustände bestimmt, von denen aus der Übergang in einen Zielzustand in endlich vielen Schritten erzwungen werden kann.
- Die Übergangsfunktion wird dadurch eingeschränkt, daß, wenn immer möglich, solche Übergänge ausgeführt werden, die "näher" an den Zielzustand führen. Ein Zustand a ist dabei dem Ziel näher als ein Zustand b, wenn von a aus weniger Schritte als von b aus benötigt werden, um in den Zielzustand zu gelangen.
- Bei der Berechnung dieser Zustandsmengen wird berücksichtigt, daß für das Verhalten des gesteuerten Prozesses wohldefinierte "Fairness"-Annahmen gelten, d.h. daß bestimmte Ereignisse jeweils nach einer nicht bekannten, aber endlichen Anzahl von Schritten eintreten müssen

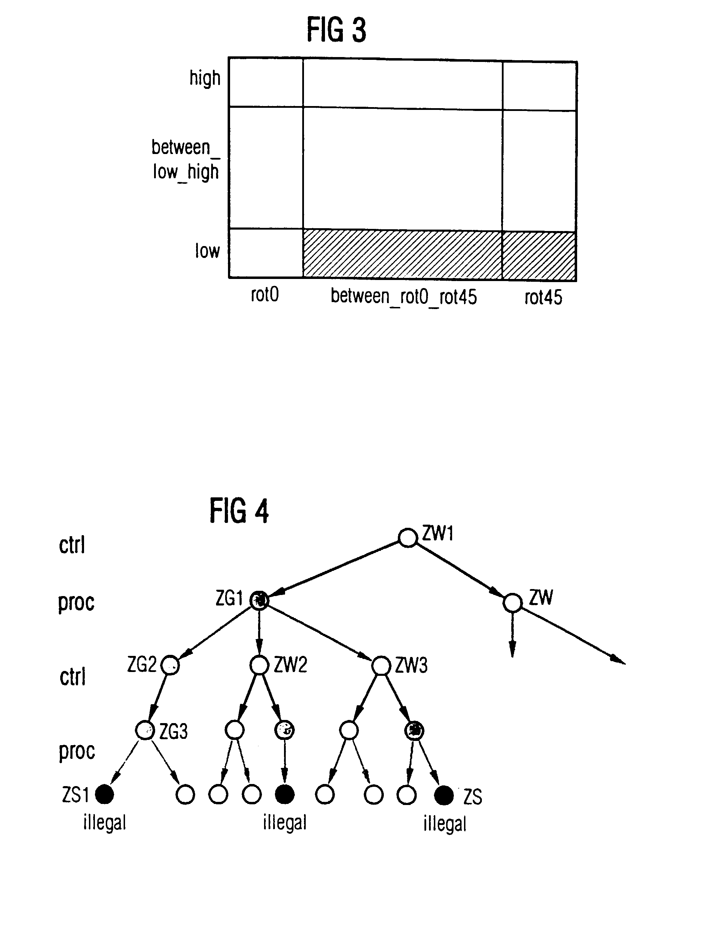

### 1.2 Beispiel Hubdrehtisch, Figur 3

Zur Illustration der Erfindung dient ein einfacher Hubdrehtisch, der hier kurz beschrieben wird:
Die Funktion des Hubdrehtisches ist es, ein Teil, das von einem Zuführband kommt, in eine Position zu heben und (um eine vertikale Achse) zu drehen, in der es dann ein Roboter greifen kann.
Demgemäß gibt es die Befehle up, down und stop für die vertikale Bewegung sowie rotate_plus (abgekürzt rot_plus), rot_minus, rot_stop für die Drehbewegung.
Es gibt zwei Lichtschranken "low" und "high" für die vertikale Position, sowie ein analoges Signal, das den Drehwinkel meldet. Für die Eingänge machen wir jedoch durchgängig folgende vereinfachende Annahme: eine Schnittstellenkomponente außerhalb der hier spezifizierten Steuerung setzt die Eingangswerte so um, daß für die beiden Dimensionen jeweils genau einer von drei möglichen Werten vorliegt, nämlich low, between_low_high, oder high, und rot0, between_rot0_rot45, oder rot45.
Damit arbeiten wir effektiv mit diskretisierten
(qualitativen) Werten.

Die Positionen (low, rot0) bzw. (high, rot45) entspricht dabei der Stellung, in der ein Teil vom Zuführband aufgelegt bzw. vom Roboter weggenommen werden kann.

Folgende Sicherheitsanforderungen sind beim Hubdrehtisch zu beachten:
"In der unteren Stellung (Sensor low = on) darf der Tisch nicht rotiert werden" (weil nämlich der Tisch sonst mit dem unmittelbar angrenzenden Zuführband kollidieren würde) bzw. im vorliegenden Kontext gleichbedeutend:
"In der unteren Stellung (low) ist nur der Drehwinkel 0 (rot0) zulässig" (Siehe Figur 2, schraffierter Bereich= verbotene ZUstände).

Für die Bewegung des Hubdrehtisches ergibt sich daraus, daß zwar eine gleichzeitige Bewegung nach oben und Drehung möglich ist, aber erst nachdem die Höhe between_low_high erreicht wurde. Diese Art Einschränkung ist typisch für viele in der Automatisierungstechnik auftretende Parallelabläufe.

### 2. Prozeßmodellierung in CSLxt

Als Voraussetzung für die Konstruktion einer sicheren und korrekten Steuerung wird eine Beschreibung der Abläufe im
(ungesteuerten) Prozeß verwendet, die im folgenden erläutert wird.

### 2.1 Vorgaben zur Anwendung von CSLxt

Bei den Zustandsattributen der Steuerung sind zu unterscheiden:
- Eingangs zustände oder Sensorzustände, die direkt von außen gesetzt werden können,
- Ausgangszustände, die direkt den Prozeß beeinflussen , und
- innere Zustände oder Steuerzustände.
Es trägt zur Klarheit bei, diese drei Arten auch syntaktisch in einem CSLxt-Programm zu unterscheiden.

Dies kann am Beispiel des Hubdrehtisches etwa wie folgt aussehen:

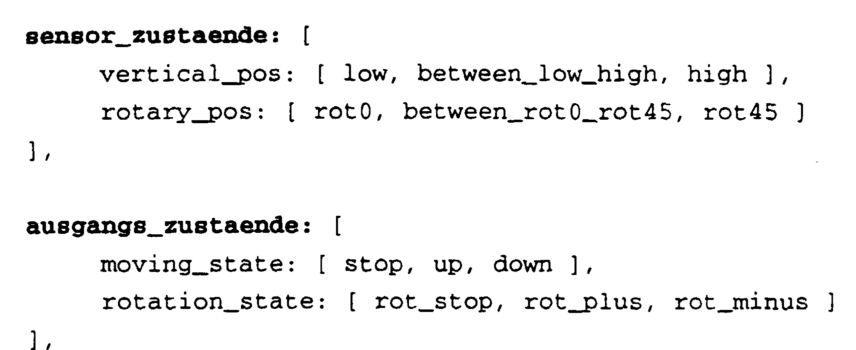

Anmerkung: Die Sprache CSLxt dient hier der Illustration der Konzepte, ist aber in ihrer spezifischen Ausprägung nicht Gegenstand der Anmeldung. Daher wird die Syntax nicht vollständig beschrieben.

### 2.2 Prozeßmodellierung mit Constraints

Beim Prozeßmodell geht es darum, zu beschreiben, wie sich die Ausgangszustände auf Eingangszustände auswirken, d.h. welche Übergänge der Eingangs zustände bei gegebener Belegung der Ausgänge möglich sind. Insofern ist die eingeführte Unterscheidung zwischen Eingangszuständen, Ausgangs zuständen und inneren Zuständen die Basis des Prozeßmodells.

Das Prozeßmodell kann als endlicher Automat beschrieben werden, der mit der Steuerung gekoppelt ist, d.h. er liest die Ausgangszustände und schreibt die Eingangs zustände der Steuerung. Für die praktische Notation des Prozeßmodells wird jedoch eine Darstellung gewählt, die diese Sichtweise nicht explizit macht. Aus Benutzersicht ist das Prozeßmodell ja schlicht ein Zusammenhang von Eingangs zuständen und Ausgangszuständen - die im folgenden vorgeschlagene Notation ist daher Teil einer CSLxt-Spezifikation. Dazu wird "process_description" als neues Konstrukt eingeführt, und anhand des folgenden Beispiels beschrieben.

Ein sehr einfaches, aber praktisch häufig auftretendes Beispiel ist die Überwachung einzelner binärer Ausgänge durch direkt zugeordnete Sensoren, etwa "Ausgangszustand: Hebel öffnen, Eingangszustand: Hebel ist offen". Diese Art Zusammenhänge wird bisher nur im Kopf des Entwicklers, aber nicht formal verarbeitet - eine häufige Fehlerquelle.

Für die folgende Darstellung wählen wir ein anderes, etwas komplexeres Beispiel, das wiederum exemplarisch ist für einen häufig vorkommenden Typ von Ausgangs-Eingangs-Zusammenhängen: Ein Ausgangswert gibt die Richtung vor, in die sich ein bestimmter Eingangswert verändert bzw. verändern soll. Diese Situation liegt immer dann vor, wenn als Aktor ein Motor dient, der die Stellung einer Komponente in zwei Richtungen verändern kann.

Es wird hier angenommen, daß alle Prozeßwerte zu qualitativen Werten abstrahiert werden. Damit hat der Ausgang den Wertebereich [stop, up, down] und der Eingang z.B. drei Werte wie [low, between_low_high, high].

Der zugehörige Ausschnitt aus dem Prozeßmodell könnte in einer anwendungsnahen Darstellung nun wie folgt aussehen:

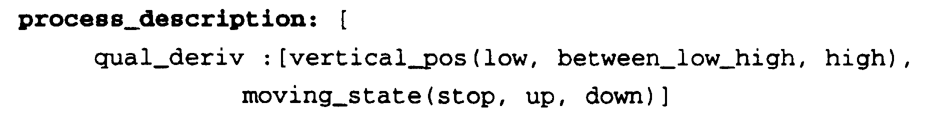

Dies soll bedeuten, daß das Attribut moving_state die qualitative Ableitung des Attributs vertical_pos darstellt, wobei die genannten Werte auftreten

Es werden natürlich neben qual_deriv weitere Varianten gebraucht, z.B. für mehr als drei Wert-Intervalle, evt1. für Motoren mit mehr als einer Geschwindigkeit, aber auch für Zusammenhänge anderer Art. Allerdings ist der Anwendungsbereich des hier vorgestellten qual_deriv und seiner engen Verwandten größer als es die Vorstellung von einem "Motor" und einer mechanischen Position suggeriert.

Weitere Beispiele, die ebenfalls als qualitative Ableitung beschreibbar sind, umfassen:
- Ventilstellungen bzw. Pumpen als Aktoren und Füllstand-Sensoren,
- Heizung bzw. Kühlung als Aktor und Temperatur-Sensoren.

Nach dem hier vorgeschlagenen Konzept braucht also der Benutzer zur Spezifikation des Prozeßmodells die einzelnen Zustandsübergänge nicht detailliert zu beschreiben, sondern lediglich die vordefinierten qualitativen Constraints wie z.B. qual_deriv verwenden. Das Prozeßmodell für den Hubdrehtisch besteht dabei aus genau zwei Constraints, nämlich dem oben genannten und einem entsprechenden für die Rotation.

Dies ist ein zusätzlicher Aufwand, der für die pure Erzeugung einer Steuerung nicht notwendig wäre und in heutigen Steuerungssprachen daher auch nicht üblich ist. Er wird aber durch den Nutzen der automatischen Generierung gerechtfertigt.

### 3. Generierung der Steuerung mit Sicherheits-Eigenschaften

Im folgenden wird ausgeführt, wie aufgrund der Spezifikation einer Sicherheitseigenschaft ein Automatenprogramm so zu transformieren ist, daß es diese Eigenschaft erfüllt.
Unter Sicherheitseigenschaft wird dabei eine beliebige aussagenlogische Bedingung in den Zustandsgrößen eines Automaten verstanden.

### 3.1 Spezifikation von Sicherheitseigenschaften

Ein Sprachkonstrukt, das zu diesem Zweck in CSLxt eingeführt wird, heißt "safety_requirements" und kann etwa wie folgt aussehen.
Die Semantik ist einfach dadurch definiert, daß die angegebene Bedingung in jedem erreichbaren Zustand des Automaten gelten soll. Es ist dabei belanglos, ob mehrere Bedingungen oder eine Konjunktion von Bedingungen angegeben wird - unter praktischen Gesichtspunkten (debugging) ist eine Liste von (evt1. auch benannten) Bedingungen vorzuziehen.

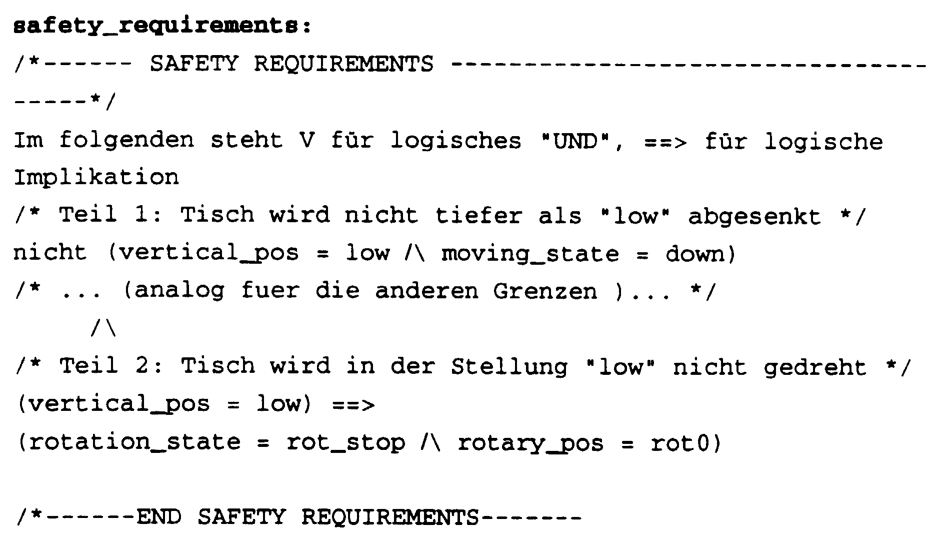

### 3.2 Lösung durch ein Minimax-Verfahren

Es wird nun das System aus Steuerung und gesteuertem Prozeß als ein Zwei-Personen-Spiel zwischen der Steuerung und dem gesteuerten Prozeß, wie folgt, betrachtet:
Abwechselnd machen die Spieler, Proc (Prozeß)und Ctrl (Steuerung) ihre Züge. Ziel des Spielers Ctrl ist es, innerhalb der als sicher definierten Zustande zu bleiben. Proc agiert blind - um den ungünstigen Fall zu beherrschen, wird aber ein "Gegenspieler" eingeführt, der versucht, in einen unsicheren Zustand zu kommen. Jeder Spieler wird die möglichen Gegenzüge berücksichtigen. Aus der Spieltheorie sind Minimax-Algorithmen als Verfahren bekannt, die für jeden Spieler in dieser Situation die optimale Strategie beschreiben.

A priori gegeben ist eine Sicherheitsanforderung (safety_requirement) SR wie in 3.1. angegeben, und Aufgabe der Steuerung ist es, deren Einhaltung zu garantieren. Es genügt aber nicht, unmittelbare Zustandsänderungen in Zuständen außerhalb SR zu vermeiden, wie das Figur 4 verdeutlicht, die eine graphische Darstellung der aufeinander folgenden Zustände zeigt. Die Zustände von ctrl und proc sind als Kreise dargestellt, deren Abhängigkeit voneinander durch Pfeile verdeutlicht sind. Die weiß unterlegten Kreise stellen erlaubte Zustände ZW dar, die grau unterlegten Kreise stellen Zustände ZG dar, die als gefährlich zu meiden sind, weil gilt: kommt das System in einen grauen Zustand, kann nicht mehr garantiert werden, daß es nicht in einen verbotenen, illegalen Zustand ZS kommt, der durch schwarze Kreise dargestellt ist. Aufgabe des Verfahrens ist es, solche "Sackgassen" zu vermeiden.
Dabei ist zu beachten:
- Ein Zustand, in dem Proc am Zug ist, ist gefährlich, falls es einen gefährlichen Folgezustand gibt.
- Ein Zustand, in dem Ctrl am Zug ist, ist gefährlich, falls alle Folgezustände gefährlich sind.

Bei Figur 4 hat Crtl ausgehend vom Zustand ZW1 zwei Möglichkeiten. Wählt Crtl den linken Ast, folgt bei Proc ein gefährlicher Zustand ZG1. ZG1 ist gefährlich, weil Proc am Zug ist und ZG2 wählen könnte.ZG2 ist gefährlich, weil keine andere Wahl als ZG3 bleibt. ZG3 ist gefährlich, weil Proc am Zug ist, durch den der Zustand ZS1 gewählt werden könnte. Die anderen Zweige können entsprechend durchlaufen werden.

Die Menge der gefährlichen Zustände auszurechnen, ist deshalb möglich, weil die gesamte Zustandsmenge endlich ist und die genannten Bedingungen immer nur Zustände hinzufügen können. Eine Iteration muß also nach endlich vielen Schritten einen Fixpunkt erreichen.

Mit "Zustandsmengen" sind im folgenden immer Mengen von Zuständen der Steuerung bezeichnet.
Für jede Zustandmenge P bezeichne **acx(P)** die Menge all der Zustände, für die in einem Schritt ein Übergang in die Menge P erzwingbar ist.
Offensichtlich besteht acx(P) aus
- allen Zuständen, in denen die Steuerung am Zug ist, sofern es wenigstens einen Folgezustand in P gibt, sowie
- allen Zuständen, in denen der Prozeß am Zug ist und für die jeder Folgezustand in P ist.
Für jede Zustandmenge P bezeichne die "größte stabilisierbare Teilmenge von P" die größte Menge Q für die gilt
Q ist in P enthalten und
Q ist in acx(Q) enthalten.

Es wird zunächst dargestellt, wie die größte stabilisierbare Teilmenge einer beliebigen Zustandsmenge berechnet werden kann:

Verfahren zur Konstruktion der größten stabilisierbaren Teilmenge:
Es sei P eine Zustandsmenge.
1. Setze Q₀ := P
2. Wiederhole Schritt 3 solange bis gilt Qᵢ = Qᵢ₊₁
3. Setze Qᵢ₊₁ := acx(Qᵢ )∩ Qᵢ
   (∩ steht für den Durchschnitt zweier Mengen)

Verfahren zur Konstruktion einer sicheren Steuerung:
1. Setze SR := Menge der Zustande, die die spezifizierten safety requirements erfüllen.
2. Setze G := größte stabilisierbare Teilmenge von SR
3. Definiere die Funktion der Steuerung so, daß zu jedem Zustand immer ein Folgezustand gewählt wird, der in G liegt.

Ergebnis des Verfahrens:
Falls der Anfangszustand nicht zu G gehört, dann ist die Spezifikation nicht erfüllbar. Andernfalls garantiert die Konstruktion gerade, daß für jedes Verhalten des Prozesses die Steuerung immer einen Zug (Transition) hat, die innerhalb der Zustandsmenge G bleibt.

### 4. Spezifikation der Funktion

Eine Steuerung, die nur sicher ist, ist von geringem praktischen Wert. Es muß selbstverständlich auch garantiert sein, daß sie die gewünschte Funktion erfüllt. Im Sinne formaler Verfahren ist die erste Voraussetzung hierfür eine Spezifikation dieser Funktion.
CSLxt kennt zwei sich ergänzende Sprachmittel zur Beschreibung funktionaler Eigenschaften:
a) Spezifikation durch explizite Angabe von Transitionen
b) Deklarative Spezifikation durch Angabe bedingter Sollzustände.
Punkt a) erfordert kein neues Verfahren und wird daher nur kurz behandelt (Abschnitt 4.1). Punkt b) ist eine Innovation von CSLxt und wird in Abschnitt 4.2. dargestellt.

### 4.1 Explizite Spezifikation

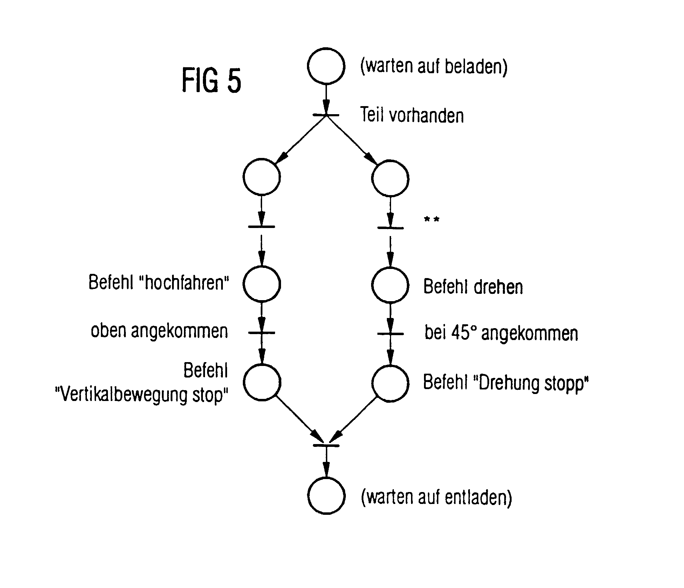

Dieser Abschnitt zeigt, wie die Funktion einer Steuerung beschrieben werden kann, so daß für die Einhaltung von Sicherheitseigenschaften das Verfahren aus Abschnitt 3. zum Einsatz kommen kann.
Zulässige Übergänge der Steuerung können z.B. in der gängigen Petri-Netz-Notation wie in Fig. 5 beschrieben werden.
Dabei steht jeweils ein Kreis für einen Zustand der Steuerung, ein waagrechter Strich für einen möglichen Übergang (Transition). Neben den Zuständen stehen Aktionen (Ausgangswerte) der Steuerung, neben den Transitionen Vorbedingungen, die zum Zeitpunkt der Transition erfüllt sein müssen, wie z.B. Sensor-Informationen.
Das Ergebnis des Minimax-Verfahrens besteht in diesem Beispiel darin, daß an der im Diagramm mit ** bezeichneten Stelle automatisch eine zusätzliche Vorbedingung eingebaut wird, die das Einhalten der Sicherheitsbedingung (erst drehen, wenn vertikale Stellung im sicheren Bereich ist) garantiert.
Wird die Automatentafel durch solche explizite Transitionen beschrieben, schränkt dies die Freiheiten ein, die für die Generierung der Sicherheit gebraucht werden. Läßt die explizite Spezifikation keine solchen Freiheiten, kann die Sicherheitsgenerierung nicht mehr arbeiten. Ihr Ergebnis wäre dann
- entweder sind die Sicherheitseigenschaften ohnehin erfüllt
- oder sie können auch durch das Iterationsverfahren nicht erfüllt werden; dieses liefert dann das Ergebnis "not okay".

Daher ist bei der expliziten Spezifikation darauf zu achten, daß keine unnötigen Details festgelegt werden, sondern die Freiheiten, die aus technologischer Sicht bestehen, auch in der Spezifikation bestehen bleiben.

### 4.2 Deklarative Spezifikation

Im folgenden wird das Sprachmittel vorgestellt, das CSLxt zur deklarativen Spezifikation der funktionalen Eigenschaften bietet. Angestrebte Vorteile sind dabei
- Komplexitätsreduktion, d.h. Vereinfachung der Spezifikation durch Konzentration auf das Wesentliche, daher
- Elimination von Fehlerquellen,
- anwendungsnahe Formulierung der funktionalen Eigenschaften. Das Konstrukt hat die Form
function: [Prae1 - Target1, Prae2 - Target2, ....]
d.h. es wird eine Liste von Paaren angegeben. Prae1, Target1 etc. stehen dabei für beliebige CSLxt-Bedingungen. Die Semantik dieses Konstrukts ist beschreibbar wie folgt:
Target1 usw. geben die Soll- oder Zielzustände an. Ein Sollzustand wird jeweils abhängig von der zugehörigen Vorbedingung Prae aktiviert. Genauer gilt für jedes Paar Prae - Target:
Solange Prae gilt, wird die Steuerung versuchen, einen Zustand herzustellen, in dem Target gilt. Dieser wird erst verlassen, wenn Prae nicht mehr gilt.
Im einfachsten Fall sind die Bedingungen Prae1, Prae2 usw. paarweise disjunkt - dies entspricht dem Umschalten zwischen verschiedenen Betriebszuständen. Es muß jedoch nicht der Fall sein.
Die Funktion des Hubdrehtischs wird mit dem function-Konstrukt wie folgt beschrieben werden: function: 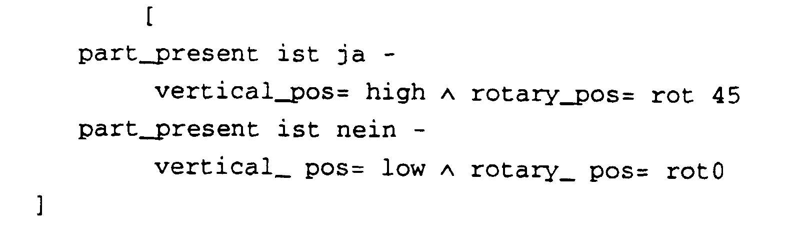 Für jedes Paar Prae - Target wird eine separate Iterationskonstruktion durchgeführt wie unter 4.3. beschrieben. Sie liefert als Ergebnis - wie für die Sicherheit - folgende Informationen
- Anfangszustand okay oder nicht okay, und
- Übergang okay oder nicht okay.
Falls beide Prüfungen "okay" ergeben, erfüllt die resultierende Steuerung per Konstruktion die funktionale Eigenschaft. Andernfalls wird dies nicht garantiert.

### 4.3 Verfahren zur Funktions-Generierung

In diesem Abschnitt wird der Algorithmus zur Generierung der funktionalen Eigenschaften beschrieben. Verwendetete Bezeichnungen
- Delta bezeichne die Übergangsrelation der Steuerung. Diese ist zu Anfang vorbelegt mit einer Relation, die vorgegebene Einschränkungen darstellt, wie etwa nach **Abschnitt** 3 konstruierte Sicherheitseigenschaften.
   Im Verlaufe des Verfahrens wird Delta weiter eingeschränkt, und bei erfolgreichem Ende des Verfahrens drückt sie am Schluß gerade die Lösung aus, d.h. die Steuerung, die die verlangte Funktion garantiert.
- Fairᵢ bezeichne die Menge, die durch folgende Bedingung gekennzeichnet ist: "der aktuelle Prozeßschritt besteht in einer Aktion der i-ten Prozeßkomponente". Diese Bedingung wird auch als (i-te) Fairness-Bedingung bezeichnet. Hierin spiegelt sich die implizite Voraussetzung, daß jede unabhängige Komponente des Prozesses "immer wieder", d.h. jeweils nach endlicher Zeit aktiv wird. Das Verfahren benutzt diese Annahme in folgender Weise: ein Fortschritt in Richtung auf einen angestrebten Zustand ist auch dadurch erreichbar, daß das Eintreten einer Fairness-Bedingung einen solchen Übergang erzwingt.
- Für jede Zustandsmenge P bezeichne acx(P) die Menge all der Zustände, für die in einem Schritt ein Übergang in die Menge P erzwingbar ist.
Die größte stabilisierbare Teilmenge von P kann berechnet werden wie unter 3. beschrieben.
Die Bezeichnungen win_{n,j,} winXₙ, aux_{n,i} stehen für Zustandsmengen, die im Laufe des Verfahrens berechnet werden:

### Verfahren

Der folgende Algorithmus wird für jedes Paar "Prae - Target" durchgeführt.
(1) Setze win_{0,0} := größte stabilisierbare Teilmenge von Target.
(2) wiederhole die Schritte (3) bis (10) für n= 0,1,2, ..., solange bis gilt
   win_{n+1,0} = win_{n,0}
(3) wiederhole die Schritte (4) und (5) für j= 0,1,2, ... solange bis gilt
   win_{n, j+1} = win_{n, j}
(4) Setze win_{n, j+1} := win_{n, j} ∪ acx(win_{n, j})
   d.h. Die Menge win_{n, j+1} besteht aus allen Zuständen der Menge win_{n, j} zuzüglich der Zustände, von denen aus in einem Schritt ein Übergang in die Menge win_{n,} ⱼ erzwingbar ist.
(5) schränke die Übergangsfunktion Delta in der Weise ein, daß, wenn immer möglich, die Menge win_{n, j+1} nicht mehr verlassen wird.
(6) Setze winXₙ := win_{n, j}
(7) Wiederhole die Schritte (8) und (9) für jede Fairness-Bedingung Fairᵢ:
(8) Setze aux_{n,i}:= größte stabilisierbare Teilmenge von (
   winXₙ ∪ (Menge der Zustände S, so daß gilt:
   falls S in Fairᵢ liegt, dann ist jeder
   Folgezustand in winXₙ))
(9) schränke die Übergangsfunktion Delta in der Weise ein, daß, wenn immer möglich, die Menge aux_{n,i} nicht mehr verlassen wird
(10) Setze schließlich win_{n+1,0} := aux_{n,1} ∪aux_{n,2} ∪... ∪ aux_{n,k}.

### Erfolgskriterium:

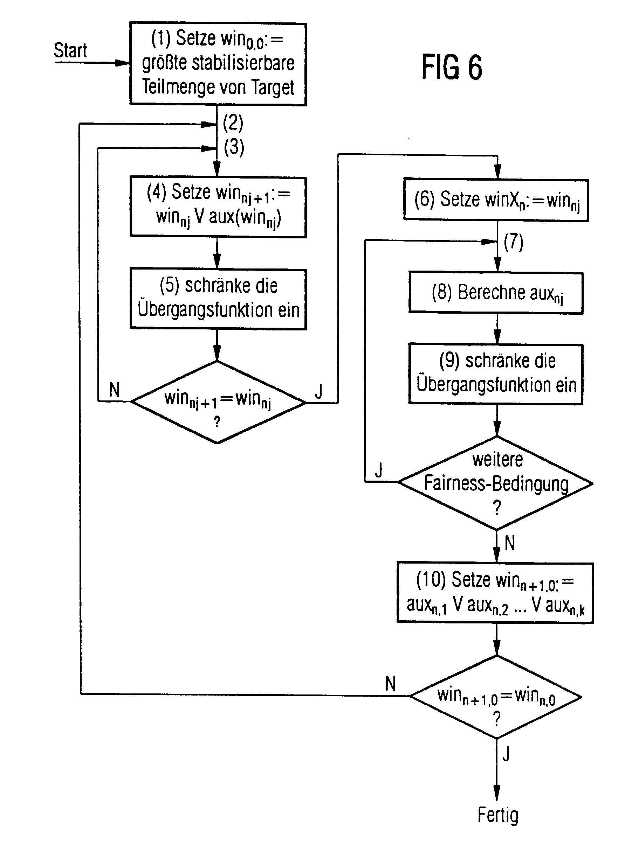

Die erzeugte Steuerung ist dann korrekt, wenn am Schluß folgendes gilt:
(1) der Anfangszustand des Systems liegt in der Menge win_{n,0}
(2) Für jeden Zustand in win_{n,0} liegen auch alle Folgezustände in win_{n,0}.
Im Fig 6 ist das Verfahren nochmals als Ablaufplan dargestellt

Nachfolgend wird ein komplettes Codebeispiel für den Hubdrehtisch angegeben:

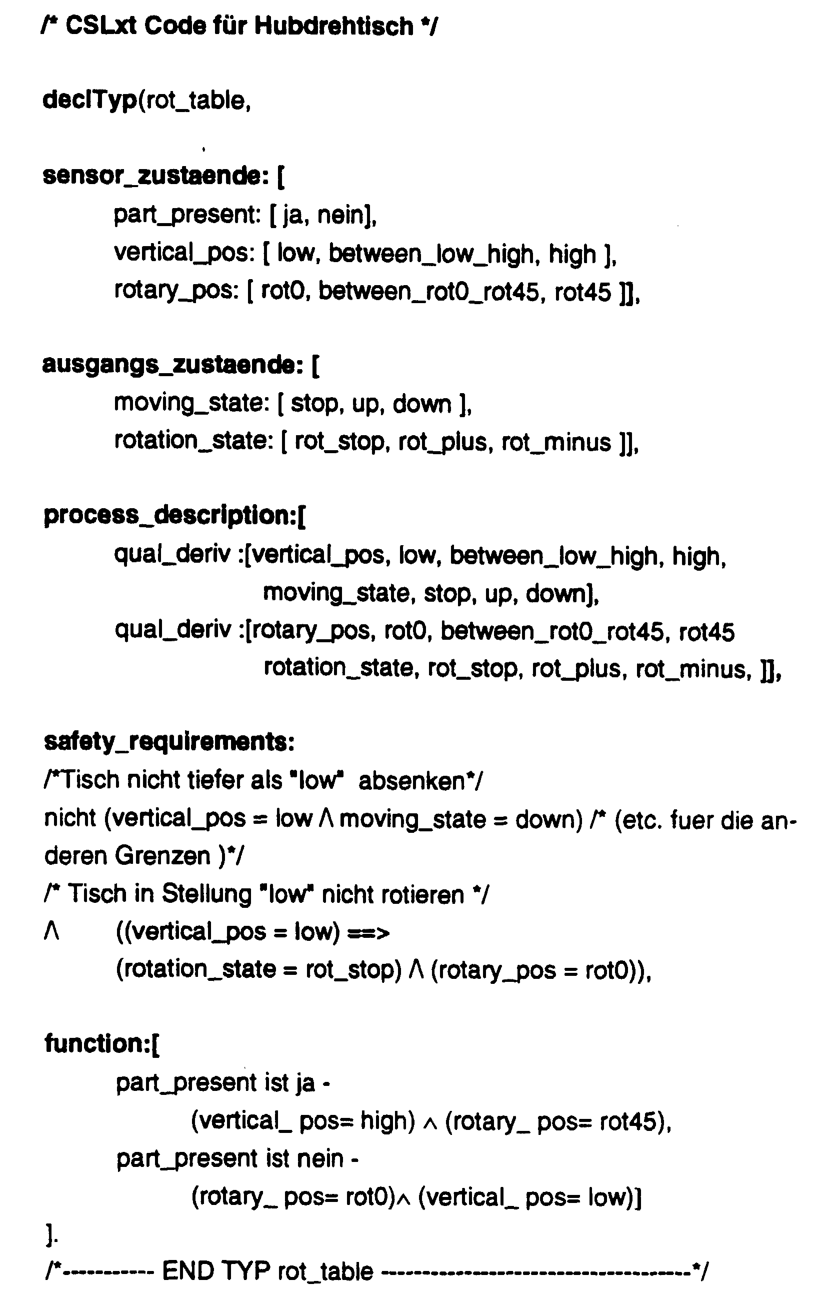

## Patentansprüche

1. Verfahren zur automatischen Erzeugung eines Steuerungsalgorithmus für eine Steuerung eines technischen Prozesses,
a) bei dem ein nicht deterministischer Automat, der alle physikalisch möglichen Verhaltensweisen der Steuerung beschreibt, festgelegt wird,
b) bei dem die erlaubten Zustandsübergänge des von der Steuerung zu beeinflussenden Prozesses beschrieben werden,
c) bei dem der Automat so eingestellt wird, daß er vorgegebene Sicherheitsbedingungen erfüllt,
d) bei dem zur Einstellung der Sicherheitsbedingungen die größte stabilisierbare Teilmenge der als zulässig spezifizierten Zustandsmenge iterativ bestimmt wird und die Übergangs funktion des Automaten so eingestellt wird, daß nur jeweils Folgezustände gewählt werden, die in dieser größten stabilisierbaren Menge liegen.
e) bei dem der Automat so eingestellt wird, daß er die Funktion des aus Steuerung und Prozeß bestehenden Systems erfüllt.

2. Verfahren nach Anspruch 1,
bei dem zur Einhaltung der Sicherheitsbedingungen für das System aus Steuerung und Prozeß folgende Zustände bei der Realisierung ausgeschlossen werden:
a) jeder Zustand der Steuerung, bei dem alle Folgezustände die Sicherheitsbedingungen nicht erfüllen,
b) jeder Zustand des Prozesses, bei dem mindestens ein Folgezustand die Sicherheitsbedingungen nicht erfüllt.

3. Verfahren nach einem der vorhergehenden Ansprüche, bei dem zur Einstellung der Funktion des Systems
a) die Funktion durch Angabe bedingter Ziel zustände definiert wird,
b) iterativ die Menge all derjenigen Zustände bestimmt wird, von denen aus der Übergang in einen Zielzustand in endlich vielen Schritten erzwungen werden kann,
c) die Übergangsfunktion dadurch eingeschränkt wird, daß, wenn möglich, solche Übergänge ausgeführt werden, die zum Zielzustand führen.

## Claims

1. Method for the automatic generation of a control algorithm, for a controller of a technical process,
a) in which a non-deterministic automaton, which describes all the physically possible modes of behaviour of the controller, is defined,
b) in which the permitted state transitions of the process to be influenced by the controller are described,
c) in which the automaton is set such that it satisfies prescribed safety conditions,
d) in which, in order to set the safety conditions, the largest subset that can be stabilized of the state set that is specified to be admissible is determined iteratively and the transfer function of the automaton is set such that in each case only those consequential states are selected which lie within this largest set that can be stabilized,
(e) in which the automaton is set such that it satisfies the function of the system comprising controller and process.

2. Method according to Claim 1,
in which, in order to comply with the safety conditions for the system comprising controller and process, the following states are excluded from the implementation:
a) each state of the controller in which all the consequential states do not satisfy the safety conditions,
b) each state of the process in which at least one consequential state does not satisfy the safety conditions.

3. Method according to one of the preceding claims, in which, in order to set the function of the system
a) the function is defined by stating conditioned target states,
b) iteratively, the set is determined of all those states from which the transition into a target state can be forced in a finite number of steps,
c) the transfer function is restricted in that, whenever possible, those transitions which lead to the target state are executed.

## Revendications

1. Procédé de génération automatique d'un algorithme de commande pour une commande d'un processus technique,
a) dans lequel on détermine un automate non déterministe décrivant tous les comportements physiquement possibles de la commande,
b) dans lequel on décrit les transitions d'états autorisées du processus devant être influencé par la commande,
c) dans lequel on ajuste l'automate de façon à ce qu'il remplisse des conditions de sécurité prédéterminées,
d) dans lequel, en vue de l'ajustement des conditions de sécurité, on détermine par itération le plus grand sous-ensemble stabilisable de l'ensemble d'états définis comme admissibles et on ajuste la fonction de transition de l'automate de façon à ne sélectionner à chaque fois que des états consécutifs inclus dans ce plus grand sous-ensemble stabilisable,
e) dans lequel on ajuste l'automate de façon à ce qu'il remplisse la fonction du système composé de la commande et du processus.

2. Procédé selon la revendication 1, dans lequel, en vue du respect des conditions de sécurité du système composé de la commande et du processus, on exclut au moment de la réalisation les états suivants :
a) chaque état de la commande, dans lequel tous les états consécutifs ne remplissent pas les conditions de sécurité,
b) chaque état de la commande, dans lequel au moins un état consécutif ne remplit pas les conditions de sécurité.

3. Procédé selon l'une des revendications précédentes, dans lequel, en vue de l'ajustement de la fonction du système,
a) on définit la fonction en indiquant des états cibles conditionnels,
b) on détermine par itération l'ensemble de tous les états à partir desquels la transition à un état cible en un nombre fini d'étapes peut être forcée,
c) on limite la fonction de transition en réalisant, si possible, des transitions conduisant à l'état cible.
